# EUROPÄISCHE PATENTSCHRIFT

(11) **EP 0 764 555 B1**
(45) Veröffentlichungstag und Bekanntmachung des Hinweises auf die Patenterteilung: **29.09.1999**
(21) Anmeldenummer: 96109084.2
(22) Anmeldetag: 05.06.1996
(51) Int. Cl.: B60J 7/22

(54) **Cabriolet mit einem Windschott**
Convertible vehicle with wind protector
Voiture cabriolet avec protecteur de vent

(30) Priorität: 25.09.1995 DE 19535593
(43) Veröffentlichungstag der Anmeldung: 26.03.1997
(73) Patentinhaber: Bayerische Motoren Werke Aktiengesellschaft, 80788 München (DE)
(72) Erfinder: Skrzypek, Uwe, 32549 Bad Oeynhausen (DE); Zapatinas, Andreas, 80937 München (DE)

(56) Entgegenhaltungen:
- EP-A- 0 599 811
- DE-A- 3 935 630
- DE-A- 4 311 240
- DE-A- 4 338 102

## Beschreibung

Die Erfindung bezieht sich auf ein Cabriolet mit einem Windschott nach dem Oberbegriff des Patentanspruches 1.

Ein bekanntes derartiges Windschott (DE 39 35 630 A1) umfaßt eine Blende als Vollkörper, an deren einer Seite auch Kopfstützen für die Fondsitze ausgebildet sind. Dies bedingt senkrecht zur Ebene des Verdeckkastendeckels einen hohen Raumbedarf und erschwert überdies eine elegante stilistische Integration des Windschotts in das Fahrzeug.

Es ist ferner bekannt (DE 43 11 240 C1), an der Unterseite eines Verdeckkastendeckels einen zweiteiligen Windschutz zu lagern. Das Verlagern des Windschutzes aus seiner Ruhestellung in die Wirkstellung bzw. zurück ist umständlich und erfordert in jedem Fall ein Öffnen des Verdeckkastendeckels.

Ein weiterer bekannter Windschutz (EP 0 599 811 A1) ist zwischen den Schenkeln des, wie üblich, in Draufsicht U-förmigen Verdeckkastendeckels angeordnet. Er besteht ebenfalls aus zwei Teilen, einer horizontalen Abdeckung, die um eine hintere Querachse schwenkbar ist und dem eigentlichen Windschutz, der aus einer Lage unterhalb der Abdeckung in eine nach oben gerichtete Wirkstellung schwenkbar ist. In der Wirkstellung wird der Windschutz durch die Abdeckung fixiert. Die beiden Teile weisen jeweils einen Rahmen auf, durch den Netze aufgespannt werden, die einen großen Teil des Windes abhalten, einen kleinen Teil jedoch durchlassen. Die Handhabung ist bei dem vorbekannten Windschutz wie folgt: es muß zuerst die Abdeckung nach oben geschwenkt, dann der Windschutz ebenfalls nach oben geschwenkt und schließlich noch die Fixierung des Windschutzes durch die Abdeckung vorgenommen werden. Eine Integration in den Verdeckkastendeckel ist nicht gegeben.

Der Erfindung liegt die Aufgabe zugrunde, ein Cabriolet mit einem Windschott der vorausgesetzten Bauart zu schaffen, bei dem eine unauffällige und dennoch stilistisch ansprechende sowie im Gebrauch einfache Handhabung des Windschotts möglich ist.

Diese Aufgabe wird erfindungsgemäß durch die im Patentanspruch 1 angegebenen Merkmale gelöst. Weitere vorteilhafte Einzelheiten der Erfindung sind Gegenstand von Unteransprüchen.

Das neue Windschott steht in Ruhestellung nicht über die Kontur des Verdeckkastendeckels hervor. Der Verdeckkastendeckel kann, im Gegensatz etwa zu einer üblichen Persenning, formstabil ausgebildet werden und gewährleistet - auch wenn er mit dem neuen Windschott versehen ist - eine gute Ästhetik des Cabriolets. Zusätzlicher Stauraum zum Aufbewahren des Windschotts, der bei einem Cabriolet eher knapp ist, wird nicht benötigt. Das Windschott ist leicht zu handhaben, denn es braucht bei Bedarf nur nach oben geschwenkt zu werden. Soll es wieder in die Ruhestellung gebracht werden, genügt ein einfaches Zurückdrücken in Richtung zum Verdeckkastendeckel, bis es mit dem Netz auf dessen Oberfläche aufliegt und bis der Rahmen des Windschotts in entsprechenden Vertiefungen des Verdeckkastendeckels aufgenommen ist.

Weitere Einzelheiten der Erfindung sind im folgenden anhand eines in der Zeichnung dargestellten Ausführungsbeispiels näher erläutert. Es zeigt
- Fig. 1: eine perspektivische Ansicht auf den hinter den Sitzen befindlichen Bereich eines Cabriolets, bei geöffnetem, versenktem Verdeck und mit dem Windschott in Ruhestellung;
- Fig. 2: eine der Fig. 1 entsprechende Ansicht, jedoch mit einem in Wirkstellung aufgerichteten Windschott;
- Fig. 3: eine der Fig. 1 ebenfalls entsprechende Ansicht, jedoch mit geöffnetem Verdeckkasten-Mittelteil;
- Fig. 4: eine der Fig. 3 entsprechende Ansicht, jedoch mit entferntem linken Seitenteil des Verdeckkastendeckels und
- Fig. 5: eine Ansicht auf das Cabriolet von hinten, bei geöffnetem Verdeckkastendeckel-Mittelteil mit daran verstauten Seitenteilen.

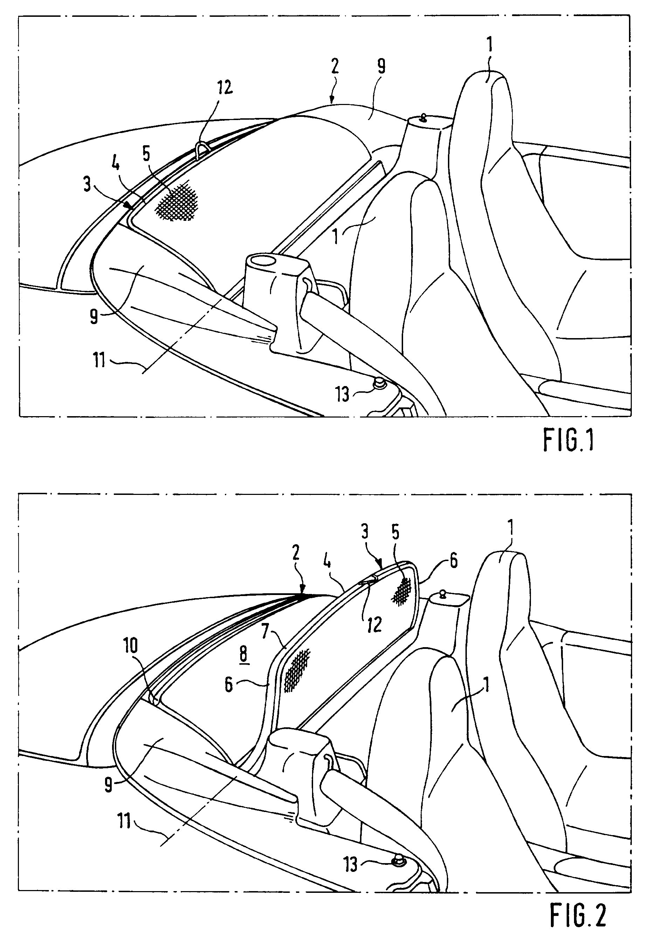

In der Zeichnung ist teilweise ein als Roadster ausgebildetes Cabriolet erkennbar, bei dem in relativ kurzem Abstand hinter den beiden Sitzen 1 ein Verdeckkastendeckel 2 vorgesehen ist. Das Cabriolet weist ferner ein Windschott 3 auf, das die als sehr lästig empfundene, vom Hinterwagen gegen die Fahrgäste gerichtete Luftströmung zu einem großen Teil abhält, zu einem kleineren - erwünschten - Teil aber auch hindurchläßt. In Fig. 1 der Zeichnung ist das Windschott 3 in seiner Ruhestellung dargestellt, in der es weitgehend auf der Oberseite des Verdeckkastendeckels 2 angeordnet ist.

In Fig. 2 ist das Windschott 3 in seiner nach oben gerichteten Wirkstellung dargestellt, in der es über die Brüstungslinie des offenen Cabriolets nach oben hervorsteht. Um das Windschott 3 in die Wirkstellung und wieder zurück in die Ruhestellung verlagern zu können, ist es um eine nicht näher erkennbare Querachse schwenkbar, die in Ruhestellung im vorderen Randbereich des Windschotts 3 verläuft.

Wie man insbesondere in Fig. 1 erkennt, ist das Windschott 3 in Ruhestellung weitgehend in die Kontur des Verdeckkastendeckels 2 integriert. Bei dem dargestellten Ausführungsbeispiel umfaßt das Windschott 3 einen Rahmen 4, durch den ein Netz 5 mit einer definierten Luftdurchlässigkeit aufgespannt ist und der in Ruhestellung (Fig. 1) in den Verdeckkastendeckel 2 versenkt ist. Der Verdeckkastendeckel 2 hat eine sphärisch gekrümmte Oberfläche. Dementsprechend sind auch die Rahmenteile 6 bzw. 7 entsprechend gekrümmt. Wie zu ersehen ist, ist auch das Netz 5 des in Wirkstellung (Fig. 2) geschwenkten Windschotts 3 etwas nach vorne gewölbt, wodurch eine aerodynamische Optimierung möglich ist. Weiterhin ist das Windschott 3 im zurückgeklappten Ruhezustand harmonisch an das Äußere des auch unter designerischen Gesichtspunkten optimierten Verdeckkastendeckels 2 angepaßt. Schließlich wird auch zur Verstauung des Windschotts 3 in dessen Ruhestellung äußerst wenig Bauraum benötigt. Über das Material des Netzes 5 und dessen Farbe können interessante designerische Effekte erzeugt werden.

Bei dem besonders bevorzugten Ausführungsbeispiel ist der Verdeckkastendeckel 2 in einen mittleren, am Fahrzeugaufbau schwenkbar gelagerten Deckelabschnitt 8 und zwei seitliche, lösbare Deckelteile 9 unterteilt. Das Windschott 3 ist dabei am mittleren Deckelabschnitt 8 schwenkbar angeordnet. Aus Fig. 2 geht ferner hervor, daß der mittlere Deckelabschnitt 8 an seinen freien Randbereichen eine Vertiefung 10 zur Aufnahme des Rahmens 4 des Windschotts 3 aufweist.

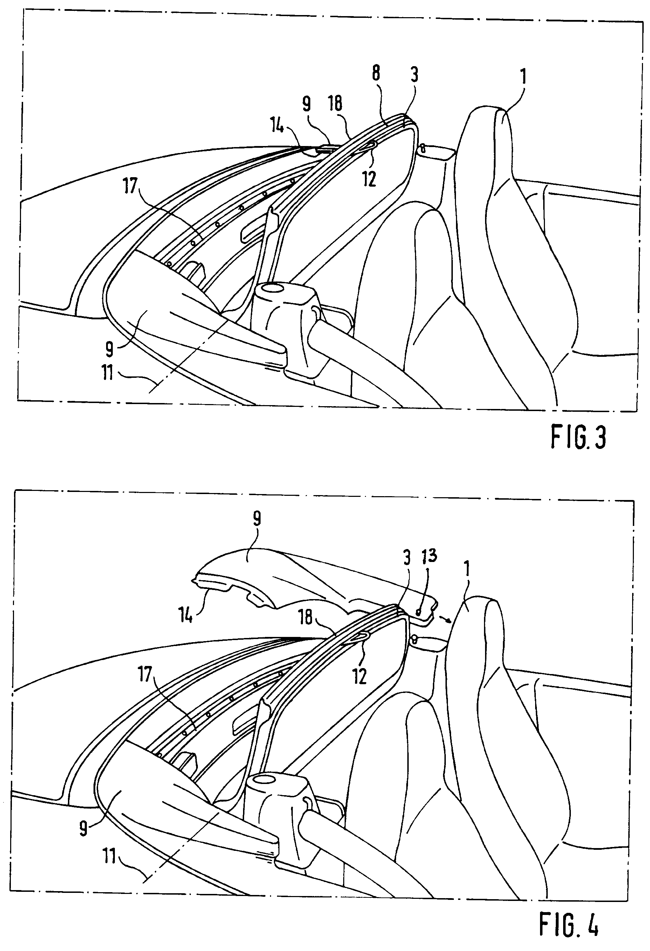

Die schon erwähnte Unterteilung des Verdeckkastendeckels 2 wird insbesondere aus den Figuren 3 bis 5 deutlich, wonach der mittlere Deckelabschnitt 8 um eine an seinem vorderen Randbereich vorgesehene, in der Zeichnung lediglich angedeutete Querachse 11 gegenüber dem Fahrzeugaufbau verschwenkbar ist. Übliche Verdeckkastendeckel sind im Gegensatz hierzu um eine Querachse nach oben schwenkbar, die an ihrem hinteren Randbereich liegt.

Das Windschott 3 ist ebenfalls um eine am vorderen Randbereich des Deckelabschnitts 8 liegende Querachse gegenüber dem Deckelabschnitt verschwenkbar. Bevorzugt haben der Deckelabschnitt 8 und das Windschott 3 eine gemeinsame Schwenkachse, nämlich die angedeutete Querachse 11.

An dem querverlaufenden Rahmenteil 7 des Rahmens 4 des Windschotts 3 ist eine Handhabe 12 zum Verschwenken des Windschotts 3 angeordnet. Bei dem dargestellten Ausführungsbeispiel ist die Handhabe 12 eine in Ruhestellung des Windschotts 3 über die Fahrzeugkontur etwas nach oben gerichtete flache Schlaufe. Diese Schlaufe kann vom Fahrer auch während der Fahrt leicht ergriffen, ggf. auch einfach ertastet werden, ohne daß der Fahrer hierbei unnötig abgelenkt würde. Zum Zurückschwenken wird das Windschott 3 lediglich mit seinem Rahmen 4 in die schon erwähnte Vertiefung 10 des mittleren Deckelabschnitts 8 gedrückt und verbleibt dort unter der Wirkung von Reibungskräften oder leicht überwindbaren Rastelementen.

Jedes seitliche Deckelteil 9 ist an einem Endbereich durch angrenzende Fahrzeugteile in Position gehalten und am anderen Endbereich durch eine lösbare Rastverbindung 13 am Fahrzeugaufbau fixiert. Die lösbare Rastverbindung 13 kann beispielsweise einen üblichen sogenannten Tenax-Knopf umfassen.

Bei dem dargestellten Ausführungsbeispiel ist die Rastverbindung 13 am vorderen Endbereich jedes seitlichen Deckelteils 9 vorgesehen.

An ihrem hinteren Ende weisen die lösbaren Deckelteile 9 jeweils wenigstens einen nach innen gerichteten Fortsatz 14 auf, der insbesondere in Fig. 4, aber auch in Fig. 3, ersichtlich ist. Über die Fortsätze 14 werden die seitlichen Deckelteile 9 durch die angrenzenden Ränder des geschlossenen mittleren Deckelabschnitts 8 nach unten belastet und - in Verbindung mit der schon erwähnten Rastverbindung 13 - somit am Fahrzeugaufbau gehalten. Jedes seitliche Deckelteil 9 kann auch im geschwungenen hinteren Randbereich mit Vorsprüngen versehen sein, die in etwa den Fortsätzen 14 entsprechen und entsprechende Ausnehmungen im Fahrzeugaufbau untergreifen.

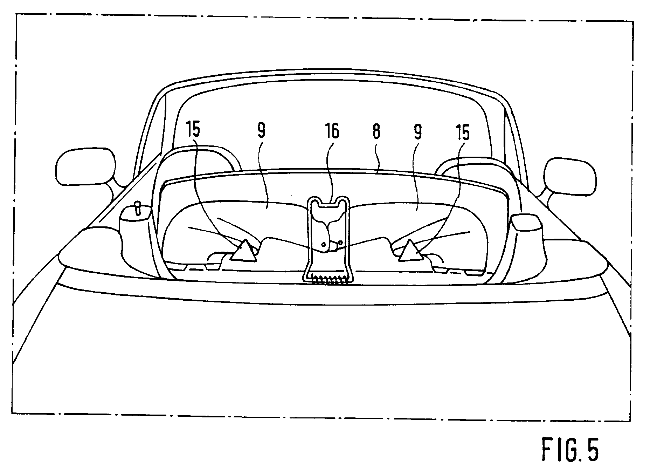

Aus Fig. 5 ist schließlich noch ersichtlich, daß der mittlere Deckelabschnitt 8, der in Fig. 5 in der geöffneten Stellung dargestellt ist, an seiner Rückseite Halteelemente zum Verstauen der seitlichen Deckelteile 9 aufweist. Die Halteelemente können beispielsweise aus nach oben gerichteten Haltelaschen 15 sowie einem federnd gegen die Deckelteile 9 anliegenden und wegschwenkbaren Bügel 16 bestehen.

Wenn das in den Figuren 3 und 4 nur mit einigen Rahmenteilen ersichtliche Verdeck 17 geschlossen wird, ist der mittlere Deckelabschnitt 8 in seiner aufgerichteten Position, in der er auch nach dem Schließen des Verdecks 17 verbleiben kann. Der mittlere Deckelabschnitt 8 kann aber auch zuvor, vor dem endgültigen Verschließen des Verdecks, in seine geschlossene Position gebracht werden. In der letzteren Position wird ein hinten am mittleren Deckelabschnitt 8 vorstehender Rand 18 vom hintersten Verdeckspriegel des Verdecks 17 bei geschlossenem Verdeck teilweise übergriffen.

## Patentansprüche

1. Cabriolet mit einem Windschott (3), das um eine Querachse (11) schwenkbar an einem Verdeckkastendeckel (2) angeordnet, in Ruhestellung weitgehend in die Kontur des Verdeckkastendeckels (2) integriert ist und aus der Ruhestellung von der Oberseite des Verdeckkastendeckels (2) in eine nach oben gerichtete Wirkstellung schwenkbar ist,
dadurch gekennzeichnet, daß das Windschott (3) einen ein Netz (5) aufspannenden Rahmen (4) aufweist, der in Ruhestellung des Windschotts (3) in den Verdeckkastendeckel (2) versenkt ist.

2. Cabriolet nach Anspruch 1,
dadurch gekennzeichnet, daß der Verdeckkastendeckel (2) eine sphärisch gekrümmte Oberfläche hat und die Rahmenteile (6 bzw. 7) entsprechend gekrümmt sind.

3. Cabriolet nach Anspruch 2,
dadurch gekennzeichnet, daß das Netz (5) des in Wirkstellung geschwenkten Windschotts (3) nach vorne gewölbt ist.

4. Cabriolet nach Anspruch 1,
dadurch gekennzeichnet, daß der Verdeckkastendeckel (2) in einen mittleren, am Fahrzeugaufbau schwenkbar gelagerten Deckelabschnitt (8) und zwei seitliche, lösbare Deckelteile (9) unterteilt ist, wobei das Windschott (3) am mittleren Deckelabschnitt (8) schwenkbar angeordnet ist.

5. Cabriolet nach Anspruch 4,
dadurch gekennzeichnet. daß der mittlere Deckelabschnitt (8) an seinen freien Randbereichen eine Vertiefung (10) zur Aufnahme des Rahmens (4) des Windschotts (3) aufweist.

6. Cabriolet nach Anspruch 4,
dadurch gekennzeichnet, daß der mittlere Deckelabschnitt (8) um eine an seinem vorderen Randbereich vorgesehene Querachse (11) gegenüber dem Fahrzeugaufbau verschwenkbar ist.

7. Cabriolet nach Anspruch 4,
dadurch gekennzeichnet, daß das Windschott (3) um eine am vorderen Randbereich des Deckelabschnitts (8) liegende Querachse gegenüber dem Deckelabschnitt verschwenkbar ist.

8. Cabriolet nach Anspruch 6 und 7,
dadurch gekennzeichnet, daß der Deckelabschnitt (8) und das Windschott (3) um eine gemeinsame Querachse (11) schwenkbar sind.

9. Cabriolet nach Anspruch 1,
dadurch gekennzeichnet, daß an einem querverlaufenden Rahmenteil (7) eine Handhabe (12) zum Verschwenken des Windschotts (3) angeordnet ist.

10. Cabriolet nach Anspruch 9,
dadurch gekennzeichnet, daß die Handhabe (12) eine in Ruhestellung des Windschotts (3) nach oben gerichtete Schlaufe ist.

11. Cabriolet nach Anspruch 4,
dadurch gekennzeichnet, daß jedes seitliche Deckelteil (9) an einem Endbereich durch angrenzende Fahrzeugteile in Position gehalten und am anderen Endbereich durch eine lösbare Rastverbindung am Fahrzeugaufbau fixiert ist.

12. Cabriolet nach Anspruch 11,
dadurch gekennzeichnet, daß die Rastverbindung (13) am vorderen Endbereich jedes seitlichen Deckelteils (9) vorgesehen ist.

13. Cabriolet nach Anspruch 11,
dadurch gekennzeichnet, daß die lösbaren Deckelteile (9) an ihrem hinteren Ende jeweils wenigstens einen nach innen gerichteten Fortsatz (14) aufweisen, mit dem die seitlichen Deckelteile (9) durch die angrenzenden Ränder des geschlossenen mittleren Deckelabschnitts (8) nach unten belastet werden.

14. Cabriolet nach Anspruch 4,
dadurch gekennzeichnet, daß der mittlere Deckelabschnitt (8) an seiner Rückseite Halteelemente zum Verstauen der seitlichen Deckelteile (9) aufweist.

15. Cabriolet nach Anspruch 4,
dadurch gekennzeichnet, daß der mittlere Deckelabschnitt (8) hinten einen vorstehenden Rand (18) aufweist, der bei geschlossenem Verdeck vom hintersten Verdeckspriegel teilweise übergriffen wird.

## Claims

1. A convertible comprising a wind bulkhead (3) which is disposed on a folding-top cover (2) so as to be pivotable around a transverse axis (11), is substantially incorporated in the contour of the folding-top cover (2) when in the inoperative position, and can be swung out of the inoperative position from the top surface of the folding-top cover (2) into an upwardly directed operative position,
characterised in that the wind bulkhead (3) has a frame (4) on which a net (5) is stretched and which is lowered into the folding-top cover (2) when the wind bulkhead (3) is in the inoperative position.

2. A convertible according to claim 1,
characterised in that the folding-top cover (2) has a spherically curved surface and the frame parts (6 or 7) are curved correspondingly.

3. A convertible according to claim 2,
characterised in that the net (5) on the wind bulkhead (6), when swung into the operative position, is convex towards the front.

4. A convertible according to claim 1,
characterised in that the folding-top cover (2) is divided into a central portion (8) pivotably mounted on the vehicle body and two detachable side portions (9), the wind bulkhead (3) being pivotably mounted on the central portion (8).

5. A convertible according to claim 4,
characterised in that the central cover portion (8) has a recess (10) in its exposed edge regions for receiving the frame (4) of the wind bulkhead (3).

6. A convertible according to claim 4,
characterised in that, relative to the vehicle body, the central cover portion (8) is pivotable around a transverse axis (11) in its front edge region.

7. A convertible according to claim 4,
characterised in that the wind bulkhead is pivotable relative to the cover portion (8) around a transverse axis in the front edge region of the said cover portion.

8. A convertible according to claim 6 or claim 7,
characterised in that the cover portion (8) and the wind bulkhead (3) are pivotable around a common transverse axis (11).

9. A convertible according to claim 1,
characterised in that a handle (12) for swinging the wind bulkhead (3) is disposed on a transverse frame part (7).

10. A convertible according to claim 9,
characterised in that the handle (12) is a loop which is directed upwards when the wind bulkhead (3) is in the inoperative position.

11. A convertible according to claim 4,
characterised in that an end region of each side cover part (9) is held in position by adjoining parts of the vehicle and the other end region is fastened to the vehicle body by a releasable catch connection.

12. A convertible according to claim 11,
characterised in that the catch connection (13) is provided at the front end region of each side cover part (9).

13. A convertible according to claim 11,
characterised in that at its rear end, the releasable cover parts (9) each have at least one inwardly directed prolongation (14) by means of which the side cover parts (9) are downwardly biased by the adjacent edges of the closed central cover portion (8).

14. A convertible according to claim 4,
characterised in that the central cover portion (8) has retaining elements on the back for stowing the side cover parts (9).

15. A convertible according to claim 4,
characterised in that the central cover portion (8) has a projecting edge (18) at the rear which is partly covered by the rearmost hoop, support or the like on the folding top when closed.

## Revendications

1. Voiture cabriolet comprenant un pare-vent (3), qui est disposé sur un couvercle de boîte de capote (2) de façon à pouvoir pivoter autour d'un axe transversal (11), qui est intégré largement, en position de repos, dans le contour du couvercle (2) de la boîte de capote, et qui peut pivoter à partir de sa position de repos, depuis la face supérieure du couvercle (2) de la boîte de capote, pou venir dans une position opérationnelle dirigée vers le haut,
caractérisée en ce que
le pare-vent (3) présente un cadre (4) qui sert à tendre un filet (5) cadre que l'on abaisse dans le couvercle (2) de la boîte de capote quand le pare-vent (3) est en position de repos.

2. Voiture cabriolet selon la revendication 1,
caractérisée en ce que
• le couvercle (2) de la boîte de capote a une surface recourbée de façon sphérique, et
• les parties du cadre (6 ou 7) sont recourbées de façon correspondante.

3. Voiture cabriolet selon la revendication 2,
caractérisée en ce que
le filet (5) du pare-vent (3) qui a pivoté dans la position opérationnelle est bombé vers l'avant

4. Voiture cabriolet selon la revendication 1,
caractérisée en ce que
le couvercle (2) de la boîte de capote est subdivisée en une section centrale (8) montée de façon à pouvoir pivoter sur la carrosserie du véhicule, et en deux parties latérales amovibles (9) de couvercle, le pare-vent (3) étant disposé de façon à pouvoir pivoter sur la section centrale (8) du couvercle.

5. Voiture cabriolet selon la revendication 4,
caractérisée en ce que
la section centrale (8) du couvercle présente sur ses zones libres de bordure un renfoncement (10) qui sert à recevoir le cadre (4) du pare-vent (3).

6. Voiture cabriolet selon la revendication 4,
caractérisée en ce qu'
on peut faire pivoter la section centrale (8) du couvercle par rapport à la carrosserie du véhicule autour d'un axe transversal (11) prévu sur sa zone de bordure antérieure.

7. Voiture cabriolet selon la revendication 4,
caractérisée en ce qu'
on peut faire pivoter le pare-vent (3) par rapport à la section de couvercle, autour d'un axe transversal qui se trouve sur la zone antérieure de bordure de la section de couvercle (8).

8. Voiture cabriolet selon les revendications 6 et 7,
caractérisée en ce que
la section de couvercle (8) et le pare-vent (3) peuvent pivoter autour d'un axe transversal commun (11).

9. Voiture cabriolet selon la revendication 1,
caractérisé en ce qu'
on dispose sur une partie (7) du cadre qui s'étend transversalement, une poignée (12) servant à faire pivoter le pare-vent (3).

10. Voiture cabriolet selon la revendication 9,
caractérisée en ce que
la poignée (12) est un crochet fermé dirigé vers le haut quand le pare-vent (3) est dans sa position de repos.

11. Voiture cabriolet selon la revendication 4,
caractérisée en ce que
chaque partie latérale (9) du couvercle est maintenue en position sur une zone terminale par des parties adjacentes du véhicule, et est fixée sur l'autre zone terminale par une liaison d'encliquetage amovible sur la carrosserie du véhicule.

12. Voiture cabriolet selon la revendication 11,
caractérisée en ce que
la liaison d'encliquetage (13) est prévue sur la zone terminale de chaque partie latérale (9) du couvercle.

13. Voiture cabriolet selon la revendication 11,
caractérisée en ce que
les parties amovibles du couvercle (9) présentent respectivement à leur extrémité postérieure au moins un prolongement orienté vers l'intérieur (14), avec lequel les parties latérales (9) du couvercle sont chargées vers le bas par les bords adjacents de la section centrale, fermée, (8) du couvercle.

14. Voiture cabriolet selon la revendication 4,
caractérisée en ce que
la section centrale (8) du couvercle présente sur son côté arrière, des éléments de maintien servant à amarrer les parties latérales (9) du couvercle.

15. Voiture cabriolet selon la revendication 4,
caractérisée en ce que
la section centrale (8) du couvercle présente, en arrière, un bord en saillie (18) avec lequel vient en partie en prise le verrou de capote le plus à l'arrière quand la capote est fermée.
